# EUROPEAN PATENT APPLICATION

(11) **EP 3 109 329 A1**
(43) Date of publication of application: **28.12.2016**
(21) Application number: 15751312.8
(22) Date of filing: 17.02.2015
(51) Int. Cl.: C21D 9/46, C22C 38/00, C22C 38/06, C22C 38/60, C25F 1/06

(54) **HIGH-STRENGTH STEEL SHEET AND METHOD FOR PRODUCING SAME**

(30) Priority: 18.02.2014 JP 2014028689
(71) Applicant: JFE Steel Corporation, Tokyo 100-0011 (JP)
(72) Inventor: FUSHIWAKI, Yusuke, Tokyo 100-0011 (JP); KAWASAKI, Yoshiyasu, Tokyo 100-0011 (JP)
(74) Representative: Grünecker Patent- und Rechtsanwälte PartG mbB
(86) International application number: PCT/JP2015/000723
(87) International publication number: WO 2015/125463

(57) **Abstract**

Provided are a high-strength steel sheet having excellent workability, excellent phosphatability, and excellent corrosion resistance after electrodeposition coating has been performed, even in the case where the contents of Si and Mn are high and a method for manufacturing the steel sheet.

(Condition 1) through (Condition 3) below are used when continuous annealing is performed on a steel sheet.

(Condition 1) In a heating process of continuous annealing, a steel sheet is heated at a heating rate of 7°C/s or more in a temperature range in an annealing furnace of 450°C or higher and A°C or lower (A: 500 ≤ A).

(Condition 2) The maximum end-point temperature of a steel sheet is 600°C or higher and 750°C or lower in continuous annealing.

(Condition 3) In a steel sheet temperature range of 600°C or higher and 750°C or lower in continuous annealing, the traveling time of the steel sheet through the temperature range is 30 seconds or more and 10 minutes or less, and the dew point of the atmosphere is -10°C or higher in the temperature range.

## Description

### [Technical Field]

The present invention relates to a high-strength steel sheet having excellent phosphatability and excellent corrosion resistance after electrodeposition coating has been performed, even in the case where the contents of Si and Mn are high and to a method for manufacturing the steel sheet.

### [Background Art]

Nowadays, from the viewpoint of an increase in the fuel efficiency of automobiles and the collision safety of automobiles, there is a growing demand for weight reduction and strengthening of automobile bodies by increasing the strength of a material for automobile bodies in order to decrease the thickness of the material for automobile bodies. Therefore, the use of a high-strength steel sheet for automobiles is accelerated.

Generally, an automotive steel sheet is used in a painted state. A chemical conversion treatment called phosphating is performed on an automotive steel sheet as a pretreatment for such painting. The chemical conversion treatment of an automotive steel sheet is one of the important treatments for achieving corrosion resistance of the steel sheet after painting has been performed.

It is effective to add Si and Mn to a steel sheet in order to increase the strength and ductility of the steel sheet. However, when continuous annealing is performed, Si and Mn are oxidized even if annealing is performed in a reducing atmosphere of N₂+H₂ gas in which oxidation of Fe does not occur (that is, oxidized Fe is reduced). As a result of such oxidation of Si and Mn, oxides selectively containing Sn and Mn (such as SiO₂ and MnO, referred to as "selective surface oxides" hereinafter) are formed in the surface of the steel sheet. Since such selective surface oxides inhibit the generation reaction of a chemical conversion film when a chemical conversion treatment is performed, a micro-region in which a chemical conversion film is not formed (also referred to as a "lack of hiding" hereinafter) is formed on the surface of the steel sheet, which results in a decrease in phosphatability.

Patent Literature 1 discloses an example of conventional techniques for increasing the phosphatability of a steel sheet containing Si and Mn in which an iron coating layer having a coating weight of 20 to 1500 mg/m² is formed on the steel sheet by using an electroplating method. However, in the case of this method, since additional electroplating equipment is needed, there is a problem of an increase in cost due to an increase in the number of processes.

In addition, phosphatability is increased by specifying a ratio Mn/Si in Patent Literature 2, or by adding Ni in Patent Literature 3. However, since such effects depend on the contents of Si and Mn in a steel sheet, further improvement is necessary in the case of a steel sheet having high Si and Mn contents.

Moreover, Patent Literature 4 discloses a method in which, by controlling the dew point to be -25°C to 0°C when annealing is performed, an internal oxide layer consisting of oxides containing Si is formed within 1 µm from the surface of a steel sheet in the depth direction so that Si-containing oxides constitute 80% or less of a length of 10 µm on the surface of a steel sheet. However, since the method according to Patent Literature 4 is based on the assumption that the zone in which the dew point is controlled is the whole furnace interior, it is difficult to control the dew point, and, as a result, it is difficult to realize a stable operation. In addition, in the case where annealing is performed while the dew point is unstably controlled, since there is a variation in the distribution of internal oxides formed in the steel sheet, there is concern that an irregularity in the result of a chemical conversion treatment or a lack of hiding may occur in whole or in part in the longitudinal direction or width direction of the steel sheet. Moreover, even in the case where there is an increase in phosphatability, since Si-containing oxides exist immediately under a chemical conversion film, there is a problem of poor corrosion resistance after electrodeposition coating has been performed in the case of the technique according to Patent Literature 4.

In addition, Patent Literature 5 discloses a method in which a steel sheet is heated to a temperature of 350°C to 650°C in an oxidizing atmosphere in order to form an oxide film on the surface of the steel sheet, then heated to the recrystallization temperature in a reducing atmosphere, and then cooled. However, in the case of this method, since the thickness of the oxide film formed on the surface of the steel sheet varies depending on an oxidizing method, there is a case where oxidizing does not sufficiently progress. In addition, in the case of the method according to Patent Literature 5, there is a case where the thickness of oxide film formed is so large that the oxide film is retained or flaking of the oxide film occurs when annealing is subsequently performed in a reducing atmosphere, which may result in a decrease in surface quality. In addition, in the EXAMPLES of Patent Literature 5, a technique in which oxidation is performed in atmospheric air is described. However, in the case of oxidation in atmospheric air, since a thick oxide is formed, there is a problem in that it is difficult to subsequently perform reduction or in that a reducing atmosphere having a high hydrogen concentration is needed.

Moreover, Patent Literature 6 discloses a method in which a cold-rolled steel sheet containing, by mass%, 0.1% or more of Si and/or 1.0% or more of Mn is heated to a temperature of 400°C or higher in an iron-oxidizing atmosphere in order to form an oxide film on the surface of the steel sheet, and the oxide film on the surface of the steel sheet described above is subsequently reduced in an iron-reducing atmosphere. Specifically, Fe on the surface of a steel sheet is oxidized at a temperature of 400°C or higher by using direct fire burners in an atmosphere having an air ratio of 0.93 or more and 1.10 or less, and then the steel sheet is annealed in an iron-reducing atmosphere of N₂+H₂ gas, which reduces oxidized Fe. With this method, the formation of selective surface oxides, which decrease phosphatability, on the surface of the steel sheet is inhibited so that an Fe oxide layer is formed on the surface of the steel sheet. The heating temperature of the direct fire burners is not specifically described in Patent Literature 6. However, in the case where the Si content is high (about 0.6% or more) in Patent Literature 6, since Si is more likely to be oxidized than Fe, there is an increase in the amount of Si oxidized, which results in the oxidation of Fe being inhibited or results in an excessive decrease in the amount of Fe oxidized. As a result, in the case of the technique according to Patent Literature 6, the layer of reduced Fe is insufficiently formed on the surface after reduction has been performed, or SiO₂ exists on the surface of the steel sheet after reduction has been performed, which may result in a lack of hiding occurring in a chemical conversion film.

### [Citation List]

### [Patent Literature]

[PTL 1] Japanese Unexamined Patent Application Publication No. 5-320952
[PTL 2] Japanese Patent No. 4319559
[PTL 3] Japanese Patent No. 2951480
[PTL 4] Japanese Patent No. 3840392
[PTL 5] Japanese Unexamined Patent Application Publication No. 55-145122
[PTL 6] Japanese Unexamined Patent Application Publication No. 2006-45615

### [Summary of Invention]

### [Technical Problem]

The present invention has been completed in view of the situation described above, and an object of the present invention is to provide a high-strength steel sheet having excellent workability, excellent phosphatability, and excellent corrosion resistance after electrodeposition coating has been performed, even in the case where the contents of Si and Mn are high, and to provide a method for manufacturing the steel sheet.

### [Solution to Problem]

In the case of conventional techniques according to Patent Literatures described above, by simply increasing water vapor partial pressure or oxygen partial pressure of the whole annealing furnace interior in order to increase a dew point or an oxygen concentration, the inside of a steel sheet is excessively oxidized. Therefore, as described above, in the case of the conventional techniques, there is a problem of a decrease in controllability of dew point or oxidation in a whole furnace interior, an irregularity in the result of a chemical conversion treatment, or a decrease in corrosion resistance after electrodeposition coating has been performed.

Therefore, the present inventors conducted investigations regarding a method for solving the problems by using a new method independent of conventional thought, and, as a result, found that, by performing higher-level control on the microstructure or structure of a steel sheet surface layer, which may become the starting point at which a decrease in corrosion resistance after electrodeposition coating has been performed occurs, there is an increase in the phosphatability and corrosion resistance after electrodeposition coating has been performed of a high-strength steel sheet. Specifically, (Condition 1) through (Condition 3) below are used when continuous annealing is performed on a steel sheet.

(Condition 1) In a heating process of continuous annealing, a steel sheet is heated at a heating rate of 7°C/sec. or more in a temperature range in an annealing furnace of 450°C or higher and A°C or lower (A: 500 ≤ A).

(Condition 2) The maximum end-point temperature of a steel sheet is 600°C or higher and 750°C or lower in continuous annealing.

(Condition 3) In a steel sheet temperature range of 600°C or higher and 750°C or lower in continuous annealing, the traveling time of the steel sheet through the temperature range is 30 seconds or more and 10 minutes or less, and the dew point of the atmosphere is -10°C or higher in the temperature range.

By performing such treatments, it is possible to inhibit the selective surface diffusion and oxidation (hereinafter, referred to as "surface concentration") of, for example, Si and Mn. As a result, it is possible to obtain a high-strength steel sheet excellent in terms of phosphatability, workability, and corrosion resistance after electrodeposition coating has been performed.

The microstructure or structure of the steel sheet surface layer of a high-strength steel sheet obtained by using the method described above has Characteristic 1 and Characteristic 2 below.

(Characteristic 1) In a region within 100 µm from the surface of the high-strength steel sheet, the oxides of at least one selected from among Fe, Si, Mn, Al, P, B, Nb, Ti, Cr, Mo, Cu, Ni, Sn, Sb, Ta, W, and V is contained in an amount of 0.010 g/m² or more and 0.050 g/m² or less per side in total.

(Characteristic 2) In an intra-grain region within 1 µm from the grain boundary of a steel sheet crystal grain existing in a region within 10 µm from the surface of the steel sheet, oxides containing crystalline Mn-based oxides are contained.

By forming a steel sheet surface layer having such characteristics, it is possible to achieve excellent phosphatability so as to inhibit a decrease in corrosion resistance after electrodeposition coating has been performed.

The present invention has been completed on the basis of the knowledge described above and has the following characteristics.
(1) A method for manufacturing a high-strength steel sheet, the method including, when a steel sheet having a chemical composition containing, by mass%, C: 0.03% or more and 0.35% or less, Si: 0.01% or more and 0.50% or less, Mn: 3.6% or more and 8.0% or less, Al: 0.01% or more and 1.0% or less, P: 0.10% or less, S: 0.010% or less, and the balance being Fe and inevitable impurities is annealed in a continuous annealing process, performing heating the steel sheet in a heating process of the continuous annealing process at a heating rate of 7°C/sec. or more in a temperature range in an annealing furnace of 450°C or higher and A°C or lower (A: 500 ≤ A), controlling the maximum end-point temperature of a steel sheet in the continuous annealing process to be 600°C or higher and 750°C or lower, and controlling, in a steel sheet temperature range of 600°C or higher and 750°C or lower in the continuous annealing process, a traveling time of the steel sheet through the temperature range to be 30 seconds or more and 10 minutes or less and a dew point of an atmosphere to be -10°C or higher in the temperature range.
(2) The method for manufacturing a high-strength steel sheet according to item (1), the steel sheet having the chemical composition further containing, by mass%, one or more chemical elements selected from among B: 0.001% or more and 0.005% or less, Nb: 0.005% or more and 0.05% or less, Ti: 0.005% or more and 0.05% or less, Cr: 0.001% or more and 1.0% or less, Mo: 0.05% or more and 1.0% or less, Cu: 0.05% or more and 1.0% or less, Ni: 0.05% or more and 1.0% or less, Sn: 0.001% or more and 0.20% or less, Sb: 0.001% or more and 0.20% or less, Ta: 0.001% or more and 0.10% or less, W: 0.001% or more and 0.10% or less, and V: 0.001% or more and 0.10% or less.
(3) The method for manufacturing a high-strength steel sheet according to item (1) or (2), the method further including performing electrolytic pickling in an aqueous solution containing sulfuric acid after the continuous annealing process has been performed.
(4) A high-strength steel sheet having the chemical composition according to item (1) or (2), the oxides of at least one or more selected from among Fe, Si, Mn, Al, P, B, Nb, Ti, Cr, Mo, Cu, Ni, Sn, Sb, Ta, W, and V in an amount of 0.010 g/m² or more and 0.050 g/m² or less per side in total in a region within 100 µm from the surface of the steel sheet, and oxides containing Mn in an intra-grain region within 1 µm from a grain boundary of a steel sheet crystal grain existing in a region within 10 µm from the surface of the steel sheet.

### [Advantageous Effects of Invention]

According to the present invention, it is possible to obtain a high-strength steel sheet having excellent workability, excellent phosphatability, and excellent corrosion resistance after electrodeposition coating has been performed, even in the case where the contents of Si and Mn are high.

In addition, according to the present invention, it is also possible to obtain a high-strength steel sheet having not only an excellent appearance quality but also excellent workability, excellent phosphatability, and excellent corrosion resistance after electrodeposition coating has been performed.

Here, "excellent phosphatability" refers to a case where a steel sheet has an appearance quality without a lack of hiding or a surface irregularity as a result of a chemical conversion treatment. By inhibiting the lack of hiding and the surface irregularity from occurring, it is possible to achieve an excellent appearance quality.

### [Description of Embodiments]

Hereafter, the embodiments of the present invention will be described. Here, the present invention is not limited to the embodiments described below.

The method for manufacturing the high-strength steel sheet according to the present invention uses (Condition 1) through (Condition 3) below when continuous annealing is performed on a steel sheet.

(Condition 1) In a heating process of continuous annealing, a steel sheet is heated at a heating rate of 7°C/sec. or more in a temperature range in an annealing furnace of 450°C or higher and A°C or lower (500 ≤ A).

(Condition 2) The maximum end-point temperature of a steel sheet is 600°C or higher and 750°C or lower in continuous annealing.

(Condition 3) In a temperature range of 600°C or higher and 750°C or lower in terms of the temperature of a steel sheet in continuous annealing, the traveling time of the steel sheet through the temperature range is 30 seconds or more and 10 minutes or less, and the dew point of the atmosphere is -10°C or higher in the temperature range.

First, a method for manufacturing a steel sheet to be subjected to continuous annealing will be described. There is no particular limitation on what method is used for manufacturing the steel sheet. For example, a method in which a hot-rolled steel sheet is manufactured by performing hot rolling on steel, a method in which a cold-rolled steel sheet is manufactured by performing hot rolling followed by cold rolling on steel, or a method in which a cold-rolled steel sheet is manufactured by performing hot rolling followed by pickling and subsequent cold rolling on steel may be used. A hot-rolled steel sheet or a cold-rolled steel sheet which has been manufactured as described above may be used as a steel sheet to be subjected to continuous annealing.

Here, there is no particular limitation on what conditions are used for hot rolling and pickling when the steel sheet described above is manufactured, and these conditions may be appropriately set. In addition, it is preferable that cold rolling be performed with a rolling reduction of 40% or more and 80% or less. In the case where the rolling reduction is less than 40%, since the recrystallization temperature is lowered, there is a tendency for mechanical properties to deteriorate. On the other hand, in the case where the rolling reduction is more than 80%, there is an increase in rolling costs because high-strength steel sheet is rolled, and there may be a decrease in phosphatability due to an increase in the degree of surface concentration when annealing is performed.

Subsequently, a process in which a steel sheet is subjected to continuous annealing will be described. Continuous annealing may be performed by using general continuous annealing equipment. An annealing furnace installed in general continuous annealing equipment has a heating zone in the front part of the furnace and a soaking zone in the rear part of the furnace. Usually, a steel sheet is heated to a specified temperature in a heating zone in the front part of the furnace and held at a specified temperature for a specified time in a soaking zone in the rear part of the furnace.

The present invention is characterized as using (Condition 1) through (Condition 3) described above when continuous annealing is performed.

As described in (Condition 1) above, in a heating process of continuous annealing, heating is performed while a heating rate is controlled to be 7°C/sec. or more in a temperature range in an annealing furnace of 450°C or higher and A°C or lower (A: 500 ≤ A). By performing heating in such a manner, since it is possible to pass a steel sheet as fast as possible through a temperature range of 450°C or higher and A°C or lower (A: 500 ≤ A), in which surface concentration of easily oxidizable chemical elements occurs (such as Si and Mn) while oxidation thereof inside a steel sheet (hereinafter, referred to as "internal oxidation") does not occur, it is possible to inhibit surface concentration. That is, it is possible to inhibit, for example, a lack of hiding and surface irregularity as a result of a chemical conversion treatment.

The effect of increasing phosphatability described above is realized by using all of (Condition 1) through (Condition 3). In particular, it is considered that (Condition 1) and (Condition 3) are important. As described above, by using (Condition 1), the formation of surface-concentration matter is inhibited as much as possible. Moreover, by using (Condition 3), it is possible to inhibit the surface concentration of, for example, Si and Mn in steel, which decrease phosphatability after annealing has been performed, in a steel sheet surface by forming an appropriate amount of internal oxides in a region inside a steel sheet within 10 µm from the surface of the steel sheet. By using these conditions, it is possible to achieve excellent phosphatability without a lack of hiding or surface irregularity and higher corrosion resistance after electrodeposition coating has been performed.

In the present invention, the reasons for using (Condition 1) through (Condition 3) will be specifically described hereafter.

As described in (Condition 1) above, in a heating process of continuous annealing, a heating rate is controlled to be 7°C/sec. or more in a temperature range in an annealing furnace of 450°C or higher and A°C or lower (where A: a value satisfying the relationship 500 ≤ A). Usually, this heating is performed in a heating zone. Here, the temperature in this temperature range refers to the temperature of a steel sheet (steel sheet temperature) which is being annealed. A steel sheet temperature may be defined as a temperature determined by using a thermometer placed at a position of a roll of each pass in an annealing furnace. Here, examples of such a thermometer include a multiple reflection-type thermometer and a radiation thermometer, and there is no particular limitation on the type of a thermometer.

The reason why the temperature range in which the heating rate is controlled is a temperature range of 450°C or higher is as follows. The level of surface concentration or internal oxidation occurring in a temperature range lower than 450°C is not high enough to cause, for example, a lack of hiding, surface irregularity, or a decrease in corrosion resistance having a negative effect. Therefore, the temperature range in which the heating rate is controlled is set to be a temperature range of 450°C or higher in which the effect of the present invention is realized.

In addition, the reason why the temperature range in which the heating rate is controlled is a temperature range of A°C or lower (where A: a value satisfying the relationship 500 ≤ A) is as follows. First, in the case where the upper limit of the temperature range in which the heating rate is controlled is lower than 500°C, since the time for which the heating rate is controlled to be 7°C/sec. or more is short, the effect of the present invention is insufficiently realized. Therefore, A is set to be 500°C or higher. In addition, in the case where the upper limit of the temperature range in which the heating rate is controlled is higher than 600°C, there is no problem with the effect of the present invention. However, in the case where the upper limit is higher than 600°C, there is a disadvantage from the viewpoint of an increase in the cost for devices in an annealing furnace (such as an additional induction heater). Therefore, it is preferable that the upper limit be 600°C or lower.

The reason why the heating rate is controlled to be 7°C/sec. or more in the temperature range described above is as follows. The effect of inhibiting surface concentration is realized in the case where the heating rate is 7°C/sec. or more. Although there is no particular limitation on the upper limit of the heating rate, in the case where the heating rate is 500°C/sec. or more, since the effect becomes saturated, there is an economic disadvantage. Therefore, it is preferable that the heating rate be 500°C/sec. or less. Here, it is possible to control the heating rate to be 7°C/sec. or more by placing, for example, an induction heater in the region of the annealing furnace where the steel sheet temperature is 450°C or higher and A°C or lower.

As described in (Condition 2) above, the maximum end-point temperature of a steel sheet is controlled to be 600°C or higher and 750°C or lower in annealing. The maximum end-point temperature of a steel sheet described above is, unless A°C is equal to the maximum end-point temperature of a steel sheet, a temperature which is reached by further performing heating from A°C which is the maximum end-point temperature reached by heating in the heating process described above. Here, "maximum end-point temperature of steel sheet" refers to the maximum temperature in annealing when a temperature is determined by using a method similar to that used for determining the steel sheet temperature described above.

The reason why the maximum end-point temperature of the steel sheet in the annealing furnace is controlled to be 600°C or higher and 750°C or lower is as follows. In the case where the maximum end-point temperature of a steel sheet is lower than 600°C, it is not possible to achieve good material properties. Therefore, in the present invention, the maximum end-point temperature of a steel sheet is set to be 600°C or higher. On the other hand, in the case where the maximum end-point temperature of a steel sheet is higher than 750°C, since surface concentration becomes marked, for example, a decrease in phosphatability begins to be recognizable. Moreover, from the viewpoint of material properties, in the case where the maximum end-point temperature of a steel sheet is higher than 750°C, the effect of a strength-ductility balance becomes saturated. Therefore, the maximum end-point temperature of the steel sheet is set to be 600°C or higher and 750°C or lower.

As described in (Condition 3) above, in a steel sheet temperature range of 600°C or higher and 750°C or lower in continuous annealing, the traveling time of the steel sheet through the temperature range is controlled to be 30 seconds or more and 10 minutes or less, and the dew point of the atmosphere is controlled to be -10°C or higher in the temperature range.

In the case where the above-described traveling time of the steel sheet is less than 30 seconds, it is not possible to achieve the target material properties (TS and El). On the other hand, in the case where the above-described traveling time of the steel sheet is more than 10 minutes, the effect of a strength-ductility balance becomes saturated.

In the case where the dew point of the atmosphere in a steel sheet temperature range of 600°C or higher and 750°C or lower in annealing is -10°C or higher, since there is an increase in the potential of O₂, which is generated by the decomposition of H₂O, due to a rise in the dew point, it is possible to promote internal oxidation. In a temperature range lower than -10°C, there is a decrease in the amount of internal oxidation. In addition, there is no particular limitation on the upper limit of the dew point. However, in the case where the dew point is higher than 90°C, since there is an increase in the amount of Fe oxidized, there is a risk of the deterioration of the surface walls of an annealing furnace or rolls. Therefore, it is preferable that the dew point be 90°C or lower.

Here, there is no particular limitation on the dew point in other temperature ranges, and the dew point may be, for example, -10°C to -40°C.

In an annealing process, using (Condition 1) through (Condition 3) described above is important for obtaining a high-strength steel sheet having excellent phosphatability and excellent corrosion resistance after electrodeposition coating has been performed. Annealing conditions other than the essential conditions described above are as follows.

In the present invention, there is no particular limitation on a soaking temperature or a soaking time in the soaking zone, and these conditions may be appropriately set.

In the continuous annealing process described above, there is no particular limitation on an atmospheric gas as long as the effect of the present invention is not decreased. Usually, the atmospheric gas contains hydrogen gas, nitrogen gas, and inevitable impurity gases. In addition, gasses other than the above-mentioned gases (for example, H₂O, CO₂, and CO) may be contained as long as the effect of the present invention is not decreased.

In the present invention, it is preferable that the hydrogen concentration in the atmosphere for continuous annealing be 1 vol% or more and 50 vol% or less. In the case where the hydrogen concentration is less than 1 vol%, since it is not possible to realize an activation effect due to reduction, there may be a decrease in phosphatability. Although there is no particular limitation on the upper limit of the hydrogen concentration, in the case where the hydrogen concentration is more than 50 vol%, there is an increase in manufacturing costs in order to increase the hydrogen concentration, and the effect due to the control of hydrogen concentration becomes saturated. Therefore, it is preferable that the hydrogen concentration be 1 vol% or more and 50 vol% or less, or more preferably 5 vol% or more and 30 vol% or less.

In the manufacturing method according to the present invention, the following treatments may be performed after continuous annealing has been performed.

After cooling the high-strength steel sheet from the temperature range of 600°C or higher and 750°C or lower, quenching and tempering may be performed as needed. There is no particular limitation on what conditions are used for quenching and tempering. It is preferable that tempering be performed at a temperature of 150°C or higher and 400°C or lower. There is a tendency for elongation of the steel sheet to decrease in the case where tempering temperature is lower than 150°C, and there is a tendency for hardness of the steel sheet to decrease in the case where the tempering temperature is higher than 400°C.

In addition, in the present invention, it is possible to achieve good phosphatability, even in the case where electrolytic pickling is not performed. However, in order to achieve better phosphatability by removing a small amount of surface-concentration matter which is inevitably formed when annealing is performed, it is preferable that electrolytic pickling be performed in an aqueous solution containing sulfuric acid on the high-strength steel sheet after continuous annealing has been performed.

There is no particular limitation on what kind of pickling solution is used for electrolytic pickling. However, nitric acid or hydrofluoric acid is not preferable, because it is necessary to carefully handle such kinds of acids because such kinds of acids have a strong corrosive effect on equipment. In addition, hydrochloric acid is not preferable, because chlorine gas may be generated from a cathode. Therefore, it is preferable to use sulfuric acid in consideration of corrosiveness and the environment. It is preferable that the sulfuric acid concentration be 5 mass% or more and 20 mass% or less. In the case where the sulfuric acid concentration is less than 5 mass%, since there is a decrease in electrical conductivity, there may be an increase in power load due to an increase in bath voltage when an electrolytic reaction occurs. On the other hand, in the case where the sulfuric acid concentration is more than 20 mass%, since there is an increase in loss due to drag-out, there is a cost problem.

There is no particular limitation on what condition is used for electrolytic pickling. In order to efficiently remove oxides of Si and Mn, which are inevitably formed and concentrated on the surface after annealing has been performed, it is preferable that alternate current electrolysis be performed with a current density of 1 A/dm² or more. The reason why alternate current electrolysis is performed is as follows. In the case where the steel sheet is held at the cathode, there is an insufficient effect of pickling. In addition, in the case where the steel sheet is held at the anode, since Fe which is eluted when electrolysis is performed is accumulated in the pickling solution, there is an increase in Fe concentration in the pickling solution, which results in problems such as dry staining due to the adhesion of Fe to the surface of the steel sheet.

It is preferable that the temperature of the electrolyte solution be 40°C or higher and 70°C or lower. Since there is an increase in bath temperature due to the heat generation caused by continuous electrolysis, there is a case where it is difficult to keep the temperature lower than 40°C. In addition, from the viewpoint of the durability of the lining of the electrolysis bath, it is not preferable that the temperature be higher than 70°C. Here, since there is an insufficient pickling effect in the case where the temperature is lower than 40°C, it is preferable that the temperature be 40°C or higher.

As described above, the present invention is a manufacturing method characterized by the continuous annealing conditions of a steel sheet. The steel sheet to be subjected to such continuous annealing will be described. Hereinafter, "%" used when describing a chemical composition refers to "mass%".

### C: 0.03% or more and 0.35% or less

C increases workability by forming, for example, martensite in a steel microstructure. In order to realize such an effect, it is necessary that the C content be 0.03% or more. On the other hand, in the case where the C content is more than 0.35%, there is a decrease in elongation due to an increase in strength, which results in a decrease in workability. Therefore, the C content is set to be 0.03% or more and 0.35% or less.

### Si: 0.01% or more and 0.50% or less

Si is a chemical element which is effective for achieving good material properties by increasing the strength of steel. However, since Si is an easily oxidizable chemical element, Si is disadvantageous for a chemical conversion treatment. From this point of view, the addition of Si should be avoided as much as possible. In addition, since Si is inevitably contained in steel in an amount of about 0.01%, there is an increase in cost in order to control the Si content to be less than 0.01%. Therefore, the lower limit of the Si content is set to be 0.01%. On the other hand, in the case where the Si content is more than 0.50%, the effect of increasing the strength and elongation of steel becomes saturated, and there is a decrease in the phosphatability of a high-strength steel sheet. Therefore, the Si content is set to be 0.01% or more and 0.50% or less. The fact that it is possible to increase phosphatability even in the case where the Si content is large is one of the characteristics of the present invention.

### Mn: 3.6% or more and 8.0% or less

Mn is a chemical element which is effective for increasing the strength of steel. In order to achieve satisfactory mechanical properties and strength, it is necessary that the Mn content be 3.6% or more. On the other hand, in the case where the Mn content is more than 8.0%, it is difficult to achieve satisfactory phosphatability and a satisfactory strength--ductility balance, and there is an economic disadvantage. Therefore, the Mn content is set to be 3.6% or more and 8.0% or less.

### Al: 0.01% or more and 1.0% or less

Al is added in order to deoxidize molten steel. However, in the case where the Al content is less than 0.01%, such an object is not realized. The effect of deoxidizing molten steel is realized in the case where the Al content is 0.01% or more. On the other hand, in the case where the Al content is more than 1.0%, there is an increase in cost. Moreover, in the case where the Al content is more than 1.0%, it is difficult to increase phosphatability due to an increase in the amount of the surface concentration of Al. Therefore, the Al content is set to be 0.01% or more and 1.0% or less.

### P: 0.10% or less

Since P is one of the chemical elements which are inevitably contained, it is not necessary that P be contained. Since there may be an increase in cost in order to control the P content to be less than 0.005%, it is preferable that the P content be 0.005% or more. On the other hand, in the case where the P content is more than 0.10%, there is a decrease in weldability. In addition, in the case where the P content is more than 0.10%, it is difficult to increase phosphatability even by using the present invention due to a significant decrease in phosphatability. Therefore, the P content is set to be 0.10% or less, and it is preferable that the lower limit of the P content be 0.005%.

### S: 0.010% or less

Since S is one of the chemical elements which are inevitably contained, it is not necessary that S be contained. Therefore, there is no particular limitation on the lower limit of the S content. In the case where the S content is large, there is a decrease in weldability and corrosion resistance. Therefore, the S content is set to be 0.010% or less.

In addition, one or more chemical elements selected from among B: 0.001% or more and 0.005% or less, Nb: 0.005% or more and 0.05% or less, Ti: 0.005% or more and 0.05% or less, Cr: 0.001% or more and 1.0% or less, Mo: 0.05% or more and 1.0% or less, Cu: 0.05% or more and 1.0% or less, Ni: 0.05% or more and 1.0% or less, Sn: 0.001% or more and 0.20% or less, Sb: 0.001% or more and 0.20% or less, Ta: 0.001% or more and 0.10% or less, W: 0.001% or more and 0.10% or less, and V: 0.001% or more and 0.10% or less may be added in a steel sheet to be subjected to continuous annealing as needed in order to improve the surface quality and strength-ductility balance of a high-strength steel sheet manufactured by using the manufacturing method according to the present invention. In the case where these chemical elements are added, the reasons of the limitation on the appropriate amounts of these chemical elements added are as follows.

### B: 0.001% or more and 0.005% or less

In the case where the B content is less than 0.001%, it is difficult to realize the effect of promoting hardenability. On the other hand, in the case where the B content is more than 0.005%, there may be a decrease in phosphatability. Therefore, in the case where B is added, it is preferable that the B content be 0.001% or more and 0.005% or less. However, in the case where it is considered that it is not necessary to add B in order to improve mechanical properties, a steel sheet does not have to contain B. Also, the other optional constituent chemical elements are added as needed.

### Nb: 0.005% or more and 0.05% or less

In the case where the Nb content is less than 0.005%, it is difficult to realize the effect of controlling strength. On the other hand, in the case where the Nb content is more than 0.05%, there is an increase in cost. Therefore, in the case where Nb is added, the Nb content is set to be 0.005% or more and 0.05% or less.

### Ti: 0.005% or more and 0.05% or less

In the case where the Ti content is less than 0.005%, it is difficult to realize the effect of controlling strength. On the other hand, in the case where the Ti content is more than 0.05%, there may be a decrease in phosphatability. Therefore, in the case where Ti is added, it is preferable that the Ti content be 0.005% or more and 0.05% or less.

### Cr: 0.001% or more and 1.0% or less

In the case where the Cr content is less than 0.001%, it is difficult to realize the effect of hardenability. On the other hand, in the case where the Cr content is more than 1.0%, since Cr is concentrated on the surface, there is a decrease in weldability. Therefore, in the case where Cr is added, it is preferable that the Cr content be 0.001% or more and 1.0% or less.

### Mo: 0.05% or more and 1.0% or less

In the case where the Mo content is less than 0.05%, it is difficult to realize the effect of controlling strength. On the other hand, in the case where the Mo content is more than 1.0%, there is an increase in cost. Therefore, in the case where Mo is added, it is preferable that the Mo content be 0.05% or more and 1.0% or less.

### Cu: 0.05% or more and 1.0% or less

In the case where the Cu content is less than 0.05%, it is difficult to realize the effect of promoting the formation of a retained γ phase. On the other hand, in the case where the Cu content is more than 1.0%, there is an increase in cost. Therefore, in the case where Cu is added, it is preferable that the Cu content be 0.05% or more and 1.0% or less.

### Ni: 0.05% or more and 1.0% or less

In the case where the Ni content is less than 0.05%, it is difficult to realize the effect of promoting the formation of a retained γ phase. On the other hand, in the case where the Ni content is more than 1.0%, there is an increase in cost. Therefore, in the case where Ni is added, it is preferable that the Ni content be 0.05% or more and 1.0% or less.

### Sn: 0.001% or more and 0.20% or less and Sb: 0.001% or more and 0.20% or less

Sn and Sb may be added in order to inhibit the nitration or oxidation of the surface of a steel sheet or the decarburization due to oxidation of a region within several tens of micrometers of the surface of a steel sheet. By inhibiting nitration and oxidation, a decrease in the amount of martensite formed in the surface of a steel sheet is prevented and there is an increase in the fatigue characteristic and surface quality of a high-strength steel sheet obtained. From the viewpoint described above, in the case where Sn and/or Sb are added, it is preferable that each of the contents of these chemical elements be set to be 0.001% or more. In addition, since there is a decrease in toughness in the case where any one of the contents of these chemical elements is more than 0.20%, it is preferable that each of the contents of these chemical elements be 0.20% or less.

### Ta: 0.001% or more and 0.10% or less

Ta contributes to an increase in strength by combining with C and N to form carbides and carbonitrides and to an increase in yield ratio (YR). Moreover, since Ta is effective for decreasing the grain diameter of the microstructure of a hot-rolled steel sheet, there is a decrease in the ferrite grain diameter of the steel sheet due to such an effect after cold rolling or annealing has been performed. In addition, since there is an increase in the amount of C segregated at the grain boundaries due to an increase in the area of the grain boundaries, it is possible to achieve a large amount of bake hardening (BH amount). From such viewpoints, Ta may be added in an amount of 0.001% or more. On the other hand, in the case where the Ta content is more than 0.10%, there is a risk in that the formation of martensite is obstructed in a cooling process following an annealing process in addition to an increase in the raw material cost. Moreover, there is a case where, since TaC precipitated in a hot-rolled steel sheet increases resistance to deformation when cold rolling is performed, it may be difficult to stably manufacture steel sheets in a practical line. Therefore, in the case where Ta is added, it is preferable that the Ta content be 0.10% or less.

### W: 0.001% or more and 0.10% or less and V: 0.001% or more and 0.10% or less

W and V, which are chemical elements effective for increasing the strength of steel through a precipitation effect by forming carbonitrides, may be added as needed. In the case where W and/or V are added, such an effect is observed when each of the contents of these chemical elements is 0.001% or more. On the other hand, in the case where any one of the contents of these chemical elements is more than 0.10%, there may be a decrease in ductility due to an excessive increase in the strength of a steel sheet. Therefore, in the case where W and/or V are added, it is preferable that each of the contents of these chemical elements be 0.001% or more and 0.10% or less.

The remaining constituent chemical elements other than those described above are Fe and inevitable impurities. There is no negative effect of the present invention, even in the case where chemical elements other than those described above are added, and the upper limit of the content is set to be 0.10%.

By controlling the conditions of continuous annealing of a steel sheet having the chemical composition described above, it is possible to obtain a high-strength steel sheet excellent in terms of workability, phosphatability, and corrosion resistance after electrodeposition coating has been performed. Hereafter, such a high-strength steel sheet will be described.

It is necessary to perform higher-level control on the microstructure or structure of a steel sheet surface layer, which may become the starting point at which, for example, corrosion cracking occurs, in order to achieve satisfactory corrosion resistance after electrodeposition coating has been performed in the case of a high-strength steel sheet containing Si and large amounts of Mn. Therefore, in the present invention, first, in order to achieve satisfactory phosphatability, oxygen potential is increased by controlling a dew point in continuous annealing. By increasing oxygen potential, since easily oxidizable chemical elements such as Si and Mn undergo internal oxidation in advance immediately before a chemical conversion treatment is performed, there is a decrease in the activity of Si and Mn on the surface of a steel sheet. In addition, the external oxidation of such chemical elements is inhibited, which results in an increase in phosphatability and corrosion resistance after electrodeposition coating has been performed. Specifically, the microstructure or structure of the steel sheet surface layer of a high-strength steel sheet manufactured by using the manufacturing method according to the present invention has the following characteristics.

(Characteristic 1) In a region within 100 µm from the surface of the high-strength steel sheet, the oxides of at least one or more selected from among Fe, Si, Mn, Al, P, B, Nb, Ti, Cr, Mo, Cu, Ni, Sn, Sb, Ta, W, and V are contained in an amount of 0.010 g/m² or more and 0.050 g/m² or less per side in total.

(Characteristic 2) In an intra-grain region within 1 µm from the grain boundary of a steel sheet crystal grain existing in a region within 10 µm from the surface of the steel sheet, oxides containing Mn are contained.

As described in (Characteristic 1) above, in a region within 100 µm from the surface of the high-strength steel sheet, the oxides of at least one or more selected from among Fe, Si, Mn, Al, P, B, Nb, Ti, Cr, Mo, Cu, Ni, Sn, Sb, Ta, W, and V are contained in an amount of 0.010 g/m² or more per side in total. With this characteristic, there is an increase in phosphatability and corrosion resistance after electrodeposition coating has been performed. In the case where the amount of the formed oxides is more than 0.050 g/m², there is concern that the oxide may become the starting point at which corrosion cracking occurs. In addition, in the case where the amount of the oxides formed is more than 0.050 g/m², since the effect of increasing phosphatability becomes saturated, it is not necessary that the amount of the oxides formed be more than 0.050 g/m².

As described in (Characteristic 2) above, in an intra-grain region within 1 µm from the grain boundary of a steel sheet crystal grain existing in a region within 10 µm from the surface of the steel sheet, oxides containing Mn are contained. In the case where internal oxides exist only at grain boundaries and where internal oxides do not exist in grains, although it is possible to inhibit the grain boundary diffusion of easily oxidizable chemical elements in steel, there is a case where it is not possible to sufficiently inhibit the intra-grain diffusion of such chemical elements. Therefore, in the present invention, as described above, by controlling a heating rate to be 7°C/sec. or more in a temperature range in an annealing furnace of 450°C or higher and A°C or lower (A: 500 ≤ A ≤ 600), internal oxidation occurs not only at grain boundaries but also in grains. Specifically, in an intra-grain region within 1 µm from the grain boundary of a base steel sheet crystal grain existing in a region within 10 µm from the surface of the steel sheet, crystalline Si- and Mn-based oxides are contained. As a result of oxides existing in the grains described above, there is a decrease in the amounts of a solid solution Si and a solid solution Mn in grains in the vicinity of the oxides. As a result, it is possible to inhibit the surface concentration of Si and Mn due to the intra-grain diffusion of Si and Mn.

Here, although the structure of the steel sheet surface of the high-strength steel sheet obtained by using the manufacturing method according to the present invention is as described above, there is no problem in that, for example, the oxides described above grow in a region more than 100 µm from the surface of a steel sheet. In addition, there is no problem in that, in an intra-grain region located at 1 µm or more from the grain boundary existing in a region located at more than 10 µm from the surface of a steel sheet, crystalline Si- and Mn-based oxides exist.

The high-strength steel sheet according to the present invention may be manufactured by performing a chemical conversion treatment on the high-strength steel sheet described above. There is no particular limitation on the kinds of a chemical conversion treatment solution, and a general solution such as a chromate treatment solution or a non-chromate treatment solution may be used. In addition, there is no particular limitation on what method is used for a chemical conversion treatment, any of various kinds of methods such as an immersing (dipping) treatment, a spraying treatment, and an electrolysis treatment may be used.

The high-strength steel sheet according to the present invention may be manufactured by forming a coating film on a chemical conversion film of the steel sheet subjected to a chemical conversion treatment by performing electrodeposition coating. There is no particular limitation on what condition is used for electrodeposition coating, and the condition may be appropriately specified.

### [EXAMPLES]

Hereafter, the present invention will be specifically described on the basis of examples.

By pickling hot-rolled steel sheets having the steel chemical composition given in Table 1 in order to remove black scale, by then performing cold rolling on the pickled steel sheets, cold-rolled steel sheets having a thickness of 1.0 mm were obtained. Here, some of the steel sheets were not subjected to cold rolling and left as hot-rolled steel sheets (having a thickness of 2.0 mm) from which black scale had been removed.

**[Table 1]**

| (mass%) | | | | | | | | | | | | | | | | | | |
|---|---|---|---|---|---|---|---|---|---|---|---|---|---|---|---|---|---|---|
| Steel Code | C | Si | Mn | Al | P | S | Cr | Mo | B | Nb | Cu | Ni | Ti | Sn | Sb | Ta | W | V |
| A | 0.12 | 0.03 | 4.5 | 0.03 | 0.01 | 0.004 | - | - | - | - | - | - | - | - | - | - | - | - |
| B | 0.03 | 0.03 | 4.6 | 0.03 | 0.01 | 0.004 | - | - | - | - | - | - | - | - | - | - | - | - |
| C | 0.35 | 0.03 | 4.7 | 0.02 | 0.01 | 0.004 | - | - | - | - | - | - | - | - | - | - | - | - |
| D | 0.12 | 0.10 | 4.5 | 0.03 | 0.01 | 0.004 | - | - | - | - | - | - | - | - | - | - | - | - |
| E | 0.13 | 0.30 | 4.7 | 0.04 | 0.01 | 0.004 | - | - | - | - | - | - | - | - | - | - | - | - |
| F | 0.12 | 0.50 | 4.6 | 0.03 | 0.01 | 0.004 | - | - | - | - | - | - | - | - | - | - | - | - |
| G | 0.12 | 0.03 | 3.6 | 0.02 | 0.01 | 0.004 | - | - | - | - | - | - | - | - | - | - | - | - |
| H | 0.13 | 0.03 | 6.3 | 0.03 | 0.01 | 0.004 | - | - | - | - | - | - | - | - | - | - | - | - |
| I | 0.12 | 0.03 | 8.0 | 0.02 | 0.01 | 0.004 | - | - | - | - | - | - | - | - | - | - | - | - |
| J | 0.13 | 0.03 | 4.5 | 0.30 | 0.01 | 0.004 | - | - | - | - | - | - | - | - | - | - | - | - |
| K | 0.12 | 0.03 | 4.6 | 1.00 | 0.01 | 0.004 | - | - | - | - | - | - | - | - | - | - | - | - |
| L | 0.12 | 0.03 | 4.7 | 0.03 | 0.05 | 0.004 | - | - | - | - | - | - | - | - | - | - | - | - |
| M | 0.12 | 0.03 | 4.5 | 0.02 | 0.10 | 0.004 | - | - | - | - | - | - | - | - | - | - | - | - |
| N | 0.13 | 0.02 | 4.7 | 0.03 | 0.01 | 0.009 | - | - | - | - | - | - | - | - | - | - | - | - |
| O | 0.12 | 0.03 | 4.6 | 0.02 | 0.01 | 0.004 | 0.8 | - | - | - | - | - | - | - | - | - | - | - |
| P | 0.13 | 0.03 | 4.5 | 0.03 | 0.01 | 0.004 | - | 0.1 | - | - | - | - | - | - | - | - | - | - |
| Q | 0.13 | 0.02 | 4.7 | 0.03 | 0.01 | 0.004 | - | - | 0.003 | - | - | - | - | - | - | - | - | - |
| R | 0.12 | 0.03 | 4.5 | 0.05 | 0.01 | 0.004 | - | - | 0.001 | 0.03 | - | - | - | - | - | - | - | - |
| S | 0.13 | 0.03 | 4.5 | 0.03 | 0.01 | 0.004 | - | 0.1 | - | - | 0.1 | 0.2 | - | - | - | - | - | - |
| T | 012 | 0.02 | 4.7 | 0.04 | 0.01 | 0.004 | - | - | 0.001 | - | - | - | 0.020 | - | - | - | - | - |
| U | 0.13 | 0.03 | 4.6 | 0.03 | 0.01 | 0.004 | - | - | - | - | - | - | 0.050 | - | - | - | - | - |
| V | 0.12 | 0.03 | 4.6 | 0.03 | 0.01 | 0.004 | - | - | - | - | - | - | - | 0.05 | - | - | - | - |
| W | 0.13 | 0.03 | 4.5 | 0.02 | 0.01 | 0.004 | - | - | - | - | - | - | - | - | 0.05 | - | - | - |
| X | 0.12 | 0.02 | 4.4 | 0.03 | 0.01 | 0.004 | - | - | - | - | - | - | - | - | - | 0.01 | - | - |
| Y | 0.12 | 0.03 | 4.5 | 0.02 | 0.01 | 0.004 | - | - | - | - | - | - | - | - | - | - | 0.01 | - |
| Z | 0.13 | 0.02 | 4.7 | 0.03 | 0.01 | 0.004 | - | - | - | - | - | - | - | - | - | - | - | 0.01 |
| XA | 0.02 | 0.02 | 4.6 | 0.03 | 0.01 | 0.004 | - | - | - | - | - | - | - | - | - | - | - | - |
| XB | 0.36 | 0.03 | 4.7 | 002 | 0.01 | 0.004 | - | - | - | - | - | - | - | - | - | - | - | - |
| XC | 0.12 | 0.60 | 4.5 | 0.03 | 0.01 | 0.004 | - | - | - | - | - | - | - | - | - | - | - | - |
| XD | 0.13 | 0.03 | 3.5 | 0.03 | 0.01 | 0.004 | - | - | - | - | - | - | - | - | - | - | - | - |
| XE | 0.12 | 0.03 | 4.6 | 1.18 | 0.01 | 0.004 | - | - | - | - | - | - | - | - | - | - | - | - |
| XF | 0.13 | 0.02 | 4.5 | 0.03 | 0.12 | 0.004 | - | - | - | - | - | - | - | - | - | - | - | - |
| XG | 0.12 | 0.02 | 4.7 | 0.04 | 0.01 | 0.020 | - | - | - | - | - | - | - | - | - | - | - | - |

| | | | | | | | | | | | | | | | | | | |
|---|---|---|---|---|---|---|---|---|---|---|---|---|---|---|---|---|---|---|
| An underiined portion indicates a value out of the range according to the present invention. | | | | | | | | | | | | | | | | | | |

Subsequently, the cold-rolled steel sheets and the hot-rolled steel sheets obtained as described above were charged into continuous annealing equipment. In the annealing equipment, as indicated in Tables 2 and 3 (Table 2-1 and Table 2-2 are combined to form Table 2 and Table 3-1 and Table 3-2 are combined to form Table 3), the heating rate in a steel sheet temperature range in the annealing furnace of 450°C or higher and A°C or lower (A: 500 ≤ A ≤ 600), the dew point and the traveling time of the steel sheet in a temperature range of 600°C or higher and 750°C or lower, and the maximum end-point temperature of the steel sheet were controlled while the steel sheets were passed through the annealing equipment in order to perform annealing. Here, the dew point in ranges in the annealing furnace other than those in which the dew point was controlled as described above was -35°C. The dew point was controlled by removing water in the atmosphere by absorption. In addition, in the present examples, the gas composition of the atmospheric gas contained nitrogen gas, hydrogen gas, and inevitable impurities. The hydrogen concentration in the atmosphere was 10 vol%.

Water quenching following continuous annealing had been performed, tempering was performed at a temperature of 300°C for 140 seconds. In the case of examples other than Nos. 32 through 35, the high-strength steel sheets obtained by performing tempering as described above were used as samples. In the case of example Nos. 32 through 35, after tempering as described above had been performed, by subsequently performing electrolytic pickling in an aqueous solution containing 5 mass% of sulfuric acid and having a temperature of 40°C with current densities given in Table 2, samples were obtained. In electrolytic pickling, alternate current electrolysis was performed with the sample being set at the anode and the cathode in this order for 3 seconds each.

The TS and El of the samples obtained as described above were determined. In addition, phosphatability, corrosion resistance after electrodeposition coating had been performed, and workability were investigated. In addition, the amount of oxides (the amount of internal oxides) existing in the surface of the steel sheet within 100 µm from the surface of the steel sheet was determined. The results are given in Tables 2 and 3. In addition, the methods for the determination and the evaluation criteria will be described hereafter.

### <Tensile strength (TS) and elongation (El)>

By using a Metallic materials-Tensile testing-Method prescribed in JIS Z 2241, tensile strength (TS) and elongation (El) were determined. The determined results were used for the evaluation of workability described below.

### <Phosphatability>

The evaluation method of phosphatability was as follows. A chemical conversion treatment was performed by using a chemical conversion treatment solution (PALBOND L-3080 (registered trademark)) produced by Nihon Parkerizing Co., Ltd. as a chemical conversion treatment solution and by using the method described below.

The sample was degreased by using a degreasing solution FINECLEANER (registered trademark) produced by Nihon Parkerizing Co., Ltd., then washed with water, then subjected to surface conditioning for 30 seconds by using a surface conditioning solution PREPALENE-Z (registered trademark) produced by Nihon Parkerizing Co., Ltd.. After surface conditioning had been performed, the sample was immersed in the chemical conversion treatment solution (PALBOND L-3080) having a temperature of 43°C for 120 seconds, then washed with water, and then dried with hot air.

Randomly selected 5 fields of view of each of the samples which had been subjected to a chemical conversion treatment were observed by using a scanning electron microscope (SEM) at a magnification of 500 times. By determining the area ratio of a lack of hiding of the chemical conversion film by using image analysis, evaluation was performed on the basis of the area ratio of a lack of hiding as described below. "A" corresponds to a satisfactory level.
A: 10% or less
C: more than 10%

### <Corrosion resistance after electrodeposition coating has been performed>

A test piece of 70 mm × 150 mm was taken from the steel sheet which had been subjected to a chemical conversion treatment by using the method described above, and subjected to cation electrodeposition coating (baking condition: 170°C × 20 minutes, film thickness: 25 µm) by using the PN-150G (registered trademark) produced by Nippon Paint Co., Ltd.. Subsequently, the end surfaces and the surface which was not to be evaluated were sealed with Al tapes, and the test piece was subjected to cross cut (crossing angle: 60°) reaching the steel sheet surface by using a cutter knife in order to obtain a test sample.

Subsequently, the test sample was immersed in a 5%-NaCl aqueous solution (55°C) for 240 hours, then taken out of the solution, then washed with water, then dried, and then subjected to a tape peeling test for the cross-cut portions in order to determine a peeling width. The determined results were evaluated on the basis of the evaluation criteria described below. "A" corresponds to a satisfactory level.
A: peeling width is less than 2.5 mm per side
C: peeling width is 2.5 mm or more per side

### <Workability>

A tensile test was performed with a constant crosshead speed of 10 mm/min in accordance with the prescription in JIS Z 2241 on a JIS No. 5 tensile test piece which had been taken from the sample in the direction at a right angle to the rolling direction in order to determine tensile strength TS (MPa) and elongation El (%), and a case where TS × El was 24000 or more was judged as good in terms of workability while a case where TS × El was less than 24000 was judged as poor in terms of workability.

### <Amount of internal oxides in a region within 100 µm of surface layer of a steel sheet>

The amount of internal oxides was determined by using an "impulse furnace melting-infrared absorption method". Here, it was necessary to subtract the amount of oxygen of the raw material (that is, a steel sheet which had not been subjected to annealing). In the present invention, the amount of oxygen OH contained in the raw material was defined as a determined value obtained by performing polishing in order to take off the surface layers having a thickness of 100 µm each or more on both surfaces of the high-strength steel sheet which had been subjected to continuous annealing and by determining the oxygen concentration in steel. In addition, the amount of oxygen OI after internal oxidation had been performed was defined as a determined value obtained by determining the oxygen concentration in steel in the whole thickness of the high-strength steel sheet which had been subjected to continuous annealing. The amount of internal oxides was defined as a converted value obtained by using the amount of oxygen OI of the high-strength steel sheet after internal oxidation had been performed and the amount of oxygen OH contained in the raw material, by calculating the difference between OI and OH (= OI - OH), and by converting the difference into a value per unit area (that is, 1 m²) per side (g/m²).

### <Evaluation of existence of internal oxides in a region within 10 µm from the surface and evaluation of existence of Mn oxides in an intra-grain region within 1 µm from the grain boundary>

By observing randomly selected 5 fields of view by performing SEM observation or TEM observation at a magnification of 20000 times, and by performing EDX analysis as needed, the evaluation was performed.

The results obtained as described above are given in Tables 2 and 3 along with the manufacturing conditions.

**[Table 2-1]**

| No. | Steel | | | Annealing Furnace | | | | | Note |
|---|---|---|---|---|---|---|---|---|---|
| | Code | Si (mass%) | Mn (mass%) | Heating Rate from 450°C to A°C (°C/sec.) | A(°C) | Dew Point from 600°C to 750°C (°C) | Maximum End-Point Temperature (°C) | Steel Sheet Traveling Time through 600°C to 750°C (min.) | |
| 1 | A | 0.03 | 4.5 | 1 | 575 | -6 | 630 | 1.5 | Comparative Example |
| 2 | A | 0.03 | 4.5 | 3 | 575 | -6 | 630 | 1.5 | Comparative Example |
| 3 | A | 0.03 | 4.5 | 5 | 575 | -6 | 630 | 1.5 | Comparative Example |
| 4 | A | 0.03 | 4.5 | 7 | 575 | -6 | 630 | 1.5 | Example |
| 5 | A | 0.03 | 4.5 | 10 | 575 | -6 | 630 | 1.5 | Example |
| 6 | A | 0.03 | 4.5 | 10 | 575 | -6 | 630 | 1.5 | Example |
| 7 | A | 0.03 | 4.5 | 30 | 575 | -6 | 630 | 1.5 | Example |
| 8 | A | 0.03 | 4.5 | 100 | 575 | -6 | 630 | 1.5 | Example |
| 9 | A | 0.03 | 4.5 | 10 | 575 | -35 | 630 | 1.5 | Comparative Example |
| 10 | A | 0.03 | 4.5 | 10 | 575 | -25 | 630 | 1.5 | Comparative Example |
| 11 | A | 0.03 | 4.5 | 10 | 575 | -15 | 630 | 1.5 | Comparative Example |
| 12 | A | 0.03 | 4.5 | 10 | 575 | -11 | 630 | 1.5 | Comparative Example |
| 13 | A | 0.03 | 4.5 | 10 | 450 | -6 | 630 | 1.5 | Comparative Example |
| 14 | A | 0.03 | 4.5 | 10 | 490 | -6 | 630 | 1.5 | Comparative Example |
| 15 | A | 0.03 | 4.5 | 10 | 500 | -6 | 630 | 1.5 | Example |
| 16 | A | 0.03 | 4.5 | 10 | 550 | -6 | 630 | 1.5 | Example |
| 17 | A | 0.03 | 4.5 | 10 | 600 | -6 | 630 | 1.5 | Example |
| 18 | A | 0.03 | 4.5 | 10 | 575 | -6 | 550 | 1.5 | Comparative Example |
| 19 | A | 0.03 | 4.5 | 10 | 575 | -6 | 590 | 1.5 | Comparative Example |
| 20 | A | 0.03 | 4.5 | 10 | 575 | -6 | 600 | 1.5 | Example |
| 21 | A | 0.03 | 4.5 | 10 | 575 | -6 | 650 | 1.5 | Example |
| 22 | A | 0.03 | 4.5 | 10 | 575 | -6 | 700 | 1.5 | Example |
| 23 | A | 0.03 | 4.5 | 10 | 575 | -6 | 750 | 1.5 | Example |
| 24 | A | 0.03 | 4.5 | 10 | 575 | -6 | 760 | 1.5 | Comparative Example |
| 25 | A | 0.03 | 4.5 | 10 | 575 | -6 | 800 | 1.5 | Comparative Example |
| 26 | A | 0.03 | 4.5 | 10 | 575 | -6 | 630 | 0.1 | Comparative Example |
| 27 | A | 0.03 | 4.5 | 10 | 575 | -6 | 630 | 0.4 | Comparative Example |
| 28 | A | 0.03 | 4.5 | 10 | 575 | -6 | 630 | 0.5 | Example |
| 29 | A | 0.03 | 4.5 | 10 | 575 | -6 | 630 | 1.0 | Example |
| 30 | A | 0.03 | 4.5 | 10 | 575 | -6 | 630 | 5.0 | Example |
| 31 | A | 0.03 | 4.5 | 10 | 575 | -6 | 630 | 10.0 | Example |
| 32 | A | 0.03 | 4.5 | 10 | 575 | -6 | 630 | 15.0 | Example |
| 33 | A | 0.03 | 4.5 | 10 | 575 | -6 | 630 | 1.5 | Example |
| 34 | A | 0.03 | 4.5 | 10 | 575 | -6 | 630 | 1.5 | Example |
| 35 | A | 0.03 | 4.5 | 10 | 575 | -6 | 630 | 1.5 | Example |
| 36 | A | 0.03 | 4.5 | 10 | 575 | -6 | 630 | 1.5 | Example |
| 37 | B | 0.03 | 4.6 | 10 | 575 | -6 | 630 | 1.5 | Example |
| 38 | C | 0.03 | 4.7 | 10 | 575 | -6 | 630 | 1.5 | Example |
| 39 | D | 0.1 | 4.5 | 10 | 575 | -6 | 630 | 1.5 | Example |
| 40 | E | 0.3 | 4.7 | 10 | 575 | -6 | 630 | 1.5 | Example |
| 41 | F | 0.5 | 4.6 | 10 | 575 | -6 | 630 | 1.5 | Example |
| 42 | G | 0.03 | 3.6 | 10 | 575 | -6 | 630 | 1.5 | Example |
| 43 | H | 0.03 | 6.3 | 10 | 575 | -6 | 630 | 1.5 | Example |
| 44 | I | 0.03 | 8.0 | 10 | 575 | -6 | 630 | 1.5 | Example |
| 45 | J | 0.03 | 4.5 | 10 | 575 | -6 | 630 | 1.5 | Example |
| 46 | K | 0.03 | 4.6 | 10 | 575 | -6 | 630 | 1.5 | Example |

| | | | | | | | | | |
|---|---|---|---|---|---|---|---|---|---|
| An underlined portion indicates a value out of the range according to the present invention. | | | | | | | | | |

**[Table 2-2]**

| No. | Amount of Internal Oxide within 100 µm of Surface (g/m²) | Internal Oxide within 10 µm of Surface | | Tempering 300°C × 140 sec. | Electrolytic Prickling (Done or Undone) | Current Density (A/dm²) | Phosphatability | Corrosion Resistance after Electrodeposition Coating | TS (MPa) | EI (%) | TS×EL | Workability | Note |
|---|---|---|---|---|---|---|---|---|---|---|---|---|---|
| | | Done or Undone | Existence of Mn Oxide in Intra-grain Region within 1 µm from Grain Boundary | Done or Undone | | | | | | | | | |
| 1 | 0.033 | A | A | Done | Undone | - | C | C | 1030 | 25.5 | 26265 | Good | Comparative Example |
| 2 | 0.038 | A | A | Done | Undone | - | C | C | 1036 | 25.0 | 25900 | Good | Comparative Example |
| 3 | 0.034 | A | A | Done | Undone | - | C | C | 1039 | 24.6 | 25559 | Good | Comparative Example |
| 4 | 0.036 | A | A | Done | Undone | - | A | A | 1040 | 25.0 | 26000 | Good | Example |
| 5 | 0.034 | A | A | Done | Undone | - | A | A | 1038 | 25.1 | 26054 | Good | Example |
| 6 | 0.033 | A | A | Undone | Undone | - | A | A | 1035 | 252 | 26082 | Good | Example |
| 7 | 0.035 | A | A | Done | Undone | - | A | A | 1003 | 24.8 | 24874 | Good | Example |
| 8 | 0.037 | A | A | Done | Undone | - | A | A | 1021 | 24.5 | 25015 | Good | Example |
| 9 | 0.003 | C | C | Done | Undone | - | C | C | 1020 | 24.6 | 25092 | Good | Comparative Example |
| 10 | 0.004 | C | C | Done | Undone | - | C | C | 1024 | 23.9 | 24474 | Good | Comparative Example |
| 11 | 0.006 | C | C | Done | Undone | - | C | C | 1035 | 24.9 | 25772 | Good | Comparative Example |
| 12 | 0.009 | C | C | Done | Undone | - | C | C | 1040 | 26.5 | 27560 | Good | Comparative Example |
| 13 | 0.037 | A | A | Done | Undone | - | C | C | 1046 | 26.3 | 27510 | Good | Comparative Example |
| 14 | 0.035 | A | A | Done | Undone | - | C | C | 1005 | 25.1 | 25226 | Good | Comparative Example |
| 15 | 0.039 | A | A | Done | Undone | - | A | A | 1023 | 24.9 | 25473 | Good | Example |
| 16 | 0.040 | A | A | Done | Undone | - | A | A | 1038 | 25.8 | 26780 | Good | Example |
| 17 | 0.037 | A | A | Done | Undone | - | A | A | 1044 | 25.0 | 26100 | Good | Example |
| 18 | 0.035 | A | A | Done | Undone | - | A | A | 1006 | 22.0 | 22132 | Poor | Comparative Example |
| 19 | 0.036 | A | A | Done | Undone | - | A | A | 1030 | 23.2 | 23896 | Poor | Comparative Example |
| 20 | 0.033 | A | A | Done | Undone | - | A | A | 1031 | 24.6 | 25363 | Good | Example |
| 21 | 0.037 | A | A | Done | Undone | - | A | A | 1021 | 24.5 | 25015 | Good | Example |
| 22 | 0.038 | A | A | Done | Undone | - | A | A | 1055 | 25.6 | 27008 | Good | Example |
| 23 | 0.033 | A | A | Done | Undone | - | A | A | 1052 | 25.8 | 27142 | Good | Example |
| 24 | 0.036 | A | A | Done | Undone | - | C | C | 712 | 40.1 | 28551 | Good | Comparative Example |
| 25 | 0.034 | A | A | Done | Undone | - | C | C | 1331 | 19.2 | 25555 | Good | Comparative Example |
| 26 | 0.038 | A | A | Done | Undone | - | A | A | 1007 | 22.5 | 22658 | Poor | Comparative Example |
| 27 | 0.034 | A | A | Done | Undone | - | A | A | 1029 | 23.3 | 23976 | Poor | Comparative Example |
| 28 | 0.036 | A | A | Done | Undone | - | A | A | 1038 | 25.5 | 26469 | Good | Example |
| 29 | 0.035 | A | A | Done | Undone | - | A | A | 1034 | 24.8 | 25643 | Good | Example |
| 30 | 0.034 | A | A | Done | Undone | - | A | A | 1029 | 25.6 | 26342 | Good | Example |
| 31 | 0.038 | A | A | Done | Undone | - | A | A | 1031 | 25.8 | 26600 | Good | Example |
| 32 | 0.034 | A | A | Done | Undone | - | A | A | 1033 | 25.5 | 26342 | Good | Example |
| 33 | 0.039 | A | A | Done | Done | 1 | A | A | 1044 | 25.6 | 26726 | Good | Example |
| 34 | 0.032 | A | A | Done | Done | 3 | A | A | 1030 | 25.1 | 25853 | Good | Example |
| 35 | 0.038 | A | A | Done | Done | 5 | A | A | 1039 | 25.2 | 26183 | Good | Example |
| 36 | 0.037 | A | A | Done | Done | 10 | A | A | 1036 | 25.9 | 26832 | Good | Example |
| 37 | 0.039 | A | A | Done | Undone | - | A | A | 681 | 40.3 | 27444 | Good | Example |
| 38 | 0.036 | A | A | Done | Undone | - | A | A | 1322 | 19.0 | 25118 | Good | Example |
| 39 | 0.034 | A | A | Done | Undone | - | A | A | 1053 | 24.1 | 25377 | Good | Example |
| 40 | 0.035 | A | A | Done | Undone | - | A | A | 754 | 36.2 | 27295 | Good | Example |
| 41 | 0.033 | A | A | Done | Undone | - | A | A | 1049 | 25.1 | 26330 | Good | Example |
| 42 | 0.034 | A | A | Done | Undone | - | A | A | 1053 | 24.6 | 25904 | Good | Example |
| 43 | 0.034 | A | A | Done | Undone | - | A | A | 1052 | 24.5 | 25774 | Good | Example |
| 44 | 0.036 | A | A | Done | Undone | - | A | A | 1056 | 24.1 | 25450 | Good | Example |
| 45 | 0.035 | A | A | Done | Undone | - | A | A | 1059 | 24.9 | 26369 | Good | Example |
| 46 | 0.037 | A | A | Done | Undone | - | A | A | 1049 | 24.6 | 25805 | Good | Example |

| | | | | | | | | | | | | | |
|---|---|---|---|---|---|---|---|---|---|---|---|---|---|
| An underlined portion indicates a value out of the range according to the present invention. | | | | | | | | | | | | | |

**[Table 3-1]**

| No. | Steel | | | Annealing Furnace | | | | | Note |
|---|---|---|---|---|---|---|---|---|---|
| | Code | Si (mass%) | Mn (mass%) | Heating Rate from 450°C to A°C (°C/sec.) | A(°C) | Dew Point from 600°C to 750°C (°C) | Maximum End-Point Temperature (°C) | Steel Sheet Traveling Time through 600°C to 750°C (min.) | |
| 47 | L | 0.03 | 4.7 | 10 | 575 | -6 | 630 | 1.5 | Example |
| 48 | M | 0.03 | 4.5 | 10 | 575 | -6 | 630 | 1.5 | Example |
| 49 | N | 0.02 | 4.7 | 10 | 575 | -6 | 630 | 1.5 | Example |
| 50 | O | 0.03 | 4.6 | 10 | 575 | -6 | 630 | 1.5 | Example |
| 51 | P | 0.03 | 4.5 | 10 | 575 | -6 | 630 | 1.5 | Example |
| 52 | Q | 0.02 | 4.7 | 10 | 575 | -6 | 630 | 1.5 | Example |
| 53 | R | 0.03 | 4.5 | 10 | 575 | -6 | 630 | 1.5 | Example |
| 54 | S | 0.03 | 4.5 | 10 | 575 | -6 | 630 | 1.5 | Example |
| 55 | T | 0.02 | 4.7 | 10 | 575 | -6 | 630 | 1.5 | Example |
| 56 | U | 0.03 | 4.6 | 10 | 575 | -6 | 630 | 1.5 | Example |
| 57 | XA | 0.02 | 4.6 | 10 | 575 | -6 | 630 | 1.5 | Comparative Example |
| 58 | XB | 0.03 | 4.7 | 10 | 575 | -6 | 630 | 1.5 | Comparative Example |
| 59 | XC | 0.6 | 4.5 | 10 | 575 | -6 | 630 | 1.5 | Comparative Example |
| 60 | XD | 0.03 | 3.5 | 10 | 575 | -6 | 630 | 1.5 | Comparative Example |
| 61 | XE | 0.03 | 4.6 | 10 | 575 | -6 | 630 | 1.5 | Comparative Example |
| 62 | XF | 0.02 | 4.5 | 10 | 575 | -6 | 630 | 1.5 | Comparative Example |
| 63 | XG | 0.02 | 4.7 | 10 | 575 | -6 | 630 | 1.5 | Comparative Example |
| 64 | E | 0.3 | 4.7 | 10 | 575 | -6 | 630 | 1.5 | Example |
| 65 | F | 0.5 | 4.6 | 10 | 575 | -6 | 630 | 1.5 | Example |
| 66 | G | 0.03 | 3.6 | 10 | 575 | -6 | 630 | 1.5 | Example |
| 67 | H | 0.03 | 6.3 | 10 | 575 | -6 | 630 | 1.5 | Example |
| 68 | I | 0.03 | 8.0 | 10 | 575 | -6 | 630 | 1.5 | Example |
| 69 | J | 0.03 | 4.5 | 10 | 575 | -6 | 630 | 1.5 | Example |
| 70 | K | 0.03 | 4.6 | 10 | 575 | -6 | 630 | 1.5 | Example |
| 71 | L | 0.03 | 4.7 | 10 | 575 | -6 | 630 | 1.5 | Example |
| 72 | M | 0.03 | 4.5 | 10 | 575 | -6 | 630 | 1.5 | Example |
| 73 | N | 0.02 | 4.7 | 10 | 575 | -6 | 630 | 1.5 | Example |
| 74 | O | 0.03 | 4.6 | 10 | 575 | -6 | 630 | 1.5 | Example |
| 75 | P | 0.03 | 4.5 | 10 | 575 | -6 | 630 | 1.5 | Example |
| 76 | Q | 0.02 | 4.7 | 10 | 575 | -6 | 630 | 1.5 | Example |
| 77 | R | 0.03 | 4.5 | 10 | 575 | -6 | 630 | 1.5 | Example |
| 78 | S | 0.03 | 4.5 | 10 | 575 | -6 | 630 | 1.5 | Example |
| 79 | T | 0.02 | 4.7 | 10 | 575 | -6 | 630 | 1.5 | Example |
| 80 | U | 0.03 | 4.6 | 10 | 575 | -6 | 630 | 1.5 | Example |
| 81 | V | 0.03 | 4.6 | 10 | 575 | -6 | 630 | 1.5 | Example |
| 82 | W | 0.03 | 4.5 | 10 | 575 | -6 | 630 | 1.5 | Example |
| 83 | X | 0.02 | 4.4 | 10 | 575 | -6 | 630 | 1.5 | Example |
| 84 | Y | 0.03 | 4.5 | 10 | 575 | -6 | 630 | 1.5 | Example |
| 85 | Z | 0.02 | 4.7 | 10 | 575 | -6 | 630 | 1.5 | Example |
| 86 | XA | 0.02 | 4.6 | 10 | 575 | -6 | 630 | 1.5 | Comparative Example |
| 87 | XB | 0.03 | 4.7 | 10 | 575 | -6 | 630 | 1.5 | Comparative Example |
| 88 | XC | 0.6 | 4.5 | 10 | 575 | -6 | 630 | 1.5 | Comparative Example |
| 89 | XD | 0.03 | 3.5 | 10 | 575 | -6 | 630 | 1.5 | Comparative Example |
| 90 | XE | 0.03 | 4.6 | 10 | 575 | -6 | 630 | 1.5 | Comparative Example |
| 91 | XF | 0.02 | 4.5 | 10 | 575 | -6 | 630 | 1.5 | Comparative Example |
| 92 | XG | 0.02 | 4.7 | 10 | 575 | -6 | 630 | 1.5 | Comparative Example |

| | | | | | | | | | |
|---|---|---|---|---|---|---|---|---|---|
| An underlined portion indicates a value out of the range according to the present invention. | | | | | | | | | |

**[Table 3-2]**

| No. | Amount of Internal Oxide within 100 µm of Surface (g/m²) | Internal Oxide within 10 µm of Surface | | Tempering 300°C × 140 sec. | Electrolytic Pickling (Done or Undone) | Current Density (A/dm²) | Phosphatability | Corrosion Resistance after Electrodeposition Coating | TS (MPa) | EI (%) | TS×EL | Workability | Note |
|---|---|---|---|---|---|---|---|---|---|---|---|---|---|
| | | Done or Undone | Existence of Mn Oxide in Intra-grain Region within 1 µm from Grain Boundary | Done or Undone | | | | | | | | | |
| 47 | 0.038 | A | A | Done | Undone | - | A | A | 1044 | 24.0 | 25056 | Good | Example |
| 48 | 0.039 | A | A | Done | Undone | - | A | A | 1046 | 24.7 | 25836 | Good | Example |
| 49 | 0.035 | A | A | Done | Undone | - | A | A | 1050 | 24.1 | 25305 | Good | Example |
| 50 | 0.035 | A | A | Done | Undone | - | A | A | 1058 | 24.5 | 25921 | Good | Example |
| 51 | 0.035 | A | A | Done | Undone | - | A | A | 1047 | 24.9 | 26070 | Good | Example |
| 52 | 0.039 | A | A | Done | Undone | - | A | A | 1045 | 23.8 | 24871 | Good | Example |
| 53 | 0.036 | A | A | Done | Undone | - | A | A | 1029 | 24.0 | 24696 | Good | Example |
| 54 | 0.039 | A | A | Done | Undone | - | A | A | 1039 | 24.9 | 25871 | Good | Example |
| 55 | 0.038 | A | A | Done | Undone | - | A | A | 1046 | 24.6 | 25732 | Good | Example |
| 56 | 0.039 | A | A | Done | Undone | - | A | A | 1045 | 26.0 | 27170 | Good | Example |
| 57 | 0.036 | A | A | Done | Undone | - | A | A | 602 | 37.5 | 22575 | Poor | Comparative Example |
| 58 | 0.038 | A | A | Done | Undone | - | A | A | 1422 | 16.4 | 23321 | Poor | Comparative Example |
| 59 | 0.039 | A | A | Done | Undone | - | C | C | 1065 | 24.6 | 26199 | Good | Comparative Example |
| 60 | 0.031 | A | A | Done | Undone | - | A | A | 1077 | 21.0 | 22617 | Poor | Comparative Example |
| 61 | 0.036 | A | A | Done | Undone | - | C | C | 1071 | 24.6 | 26347 | Good | Comparative Example |
| 62 | 0.041 | A | A | Done | Undone | - | C | C | 1046 | 22.5 | 23535 | Poor | Comparative Example |
| 63 | 0.040 | A | A | Done | Undone | - | A | C | 1048 | 19.9 | 20855 | Poor | Comparative Example |
| 64 | 0.039 | A | A | Done | Undone | - | A | A | 780 | 36.1 | 28158 | Good | Example |
| 65 | 0.035 | A | A | Done | Undone | - | A | A | 1049 | 25.1 | 26330 | Good | Example |
| 66 | 0.036 | A | A | Done | Undone I | - | A | A | 1052 | 24.6 | 25879 | Good | Example |
| 67 | 0.037 | A | A | Done | Undone | - | A | A | 1056 | 24.5 | 25872 | Good | Example |
| 68 | 0.038 | A | A | Done | Undone | - | A | A | 1054 | 24.1 | 25401 | Good | Example |
| 69 | 0.040 | A | A | Done | Undone | - | A | A | 1049 | 24.7 | 25910 | Good | Example |
| 70 | 0.038 | A | A | Done | Undone | - | A | A | 1044 | 23.9 | 24952 | Good | Example |
| 71 | 0.039 | A | A | Done | Undone | - | A | A | 1043 | 23.8 | 24823 | Good | Example |
| 72 | 0.040 | A | A | Done | Undone | - | A | A | 1050 | 23.4 | 24570 | Good | Example |
| 73 | 0.036 | A | A | Done | Undone | - | A | A | 1049 | 23.5 | 24652 | Good | Example |
| 74 | 0.037 | A | A | Done | Undone | - | A | A | 1047 | 24.0 | 25128 | Good | Example |
| 75 | 0.035 | A | A | Done | Undone | - | A | A | 1044 | 24.6 | 25682 | Good | Example |
| 76 | 0.039 | A | A | Done | Undone | - | A | A | 1040 | 23.8 | 24752 | Good | Example |
| 77 | 0.036 | A | A | Done | Undone | - | A | A | 1039 | 24.1 | 25040 | Good | Example |
| 78 | 0.039 | A | A | Done | Undone | - | A | A | 1038 | 25.0 | 25950 | Good | Example |
| 79 | 0.041 | A | A | Done | Undone | - | A | A | 1046 | 24.6 | 25732 | Good | Example |
| 80 | 0.039 | A | A | Done | Undone | - | A | A | 1041 | 24.7 | 25713 | Good | Example |
| 81 | 0.040 | A | A | Done | Undone | - | A | A | 1043 | 26.3 | 27431 | Good | Example |
| 82 | 0.038 | A | A | Done | Undone | - | A | A | 1042 | 26.1 | 27196 | Good | Example |
| 83 | 0.039 | A | A | Done | Undone | - | A | A | 1040 | 25.8 | 26832 | Good | Example |
| 84 | 0.041 | A | A | Done | Undone | - | A | A | 1039 | 26.1 | 27118 | Good | Example |
| 85 | 0.039 | A | A | Done | Undone | - | A | A | 1032 | 26.9 | 27761 | Good | Example |
| 86 | 0.036 | A | A | Done | Undone | - | A | A | 602 | 37.1 | 22334 | Poor | Comparative Example |
| 87 | 0.037 | A | A | Done | Undone | - | A | A | 1420 | 15.6 | 22152 | Poor | Comparative Example |
| 88 | 0.039 | A | A | Done | Undone | - | C | C | 1069 | 24.1 | 25763 | Good | Comparative Example |
| 89 | 0.032 | A | A | Done | Undone | - | A | A | 1062 | 19.8 | 21028 | Poor | Comparative Example |
| 90 | 0.034 | A | A | Done | Undone | - | C | C | 1058 | 23.4 | 24757 | Good | Comparative Example |
| 91 | 0.039 | A | A | Done | Undone | - | C | C | 1040 | 21.9 | 22776 | Poor | Comparative Example |
| 92 | 0.037 | A | A | Done | Undone | - | A | C | 1037 | 19.8 | 20533 | Poor | Comparative Example |

| | | | | | | | | | | | | | |
|---|---|---|---|---|---|---|---|---|---|---|---|---|---|
| An underlined portion indicates a value out of the range according to the present invention. | | | | | | | | | | | | | |

As Tables 2 and 3 indicate, it is clarified that the high-strength steel sheets manufactured by using the method according to the present invention were excellent in terms of phosphatability, corrosion resistance, and workability despite containing a large amount of easily oxidizable chemical elements such as Si and Mn. On the other hand, the comparative examples were poor in terms of one or more of phosphatability, corrosion resistance, and workability.

### [Industrial Applicability]

Since the high-strength steel sheet according to the present invention is excellent in terms of phosphatability, corrosion resistance, and workability, it is possible to use the steel sheet as a surface-treated steel sheet for the weight reduction and strengthening of automobile bodies. Also, it is possible to use the steel sheet as a surface-treated steel sheet, which is manufactured by providing a raw material steel sheet with rust prevention capability, in wide fields such as domestic electrical appliance and architectural material industries in addition to automobile industry.

## Claims

1. A method for manufacturing a high-strength steel sheet, the method comprising,
when a steel sheet having a chemical composition containing, by mass%, C: 0.03% or more and 0.35% or less, Si: 0.01% or more and 0.50% or less, Mn: 3.6% or more and 8.0% or less, Al: 0.01% or more and 1.0% or less, P: 0.10% or less, S: 0.010% or less, and the balance being Fe and inevitable impurities is annealed in a continuous annealing process,
performing heating the steel sheet in a heating process of the continuous annealing process at a heating rate of 7°C/sec. or more in a temperature range in an annealing furnace of 450°C or higher and A°C or lower (A: 500 ≤ A),
controlling the maximum end-point temperature of a steel sheet in the continuous annealing process to be 600°C or higher and 750°C or lower, and
controlling, in a steel sheet temperature range of 600°C or higher and 750°C or lower in the continuous annealing process, a traveling time of the steel sheet through the temperature range to be 30 seconds or more and 10 minutes or less and a dew point of an atmosphere to be -10°C or higher in the temperature range.

2. The method for manufacturing a high-strength steel sheet according to Claim 1, the steel sheet having the chemical composition further containing, by mass%, one or more chemical elements selected from among B: 0.001% or more and 0.005% or less, Nb: 0.005% or more and 0.05% or less, Ti: 0.005% or more and 0.05% or less, Cr: 0.001% or more and 1.0% or less, Mo: 0.05% or more and 1.0% or less, Cu: 0.05% or more and 1.0% or less, Ni: 0.05% or more and 1.0% or less, Sn: 0.001% or more and 0.20% or less, Sb: 0.001% or more and 0.20% or less, Ta: 0.001% or more and 0.10% or less, W: 0.001% or more and 0.10% or less, and V: 0.001% or more and 0.10% or less.

3. The method for manufacturing a high-strength steel sheet according to Claim 1 or 2, the method further comprising performing electrolytic pickling in an aqueous solution containing sulfuric acid after the continuous annealing process has been performed.

4. A high-strength steel sheet having the chemical composition according to Claim 1 or 2, the oxides of at least one or more selected from among Fe, Si, Mn, Al, P, B, Nb, Ti, Cr, Mo, Cu, Ni, Sn, Sb, Ta, W, and V in an amount of 0.010 g/m² or more and 0.050 g/m² or less per side in total in a region within 100 µm from the surface of the steel sheet, and oxides containing Mn in an intra-grain region within 1 µm from a grain boundary of a steel sheet crystal grain existing in a region within 10 µm from the surface of the steel sheet.
